# EUROPEAN PATENT SPECIFICATION

(11) **EP 1 625 089 B1**
(45) Date of publication and mention of the grant of the patent: **25.02.2009**
(21) Application number: 04728080.5
(22) Date of filing: 16.04.2004
(51) Int. Cl.: B65G 69/08, B65D 88/66, B65G 67/60

(54) **METHOD AND DEVICE FOR LOOSENING BULK CARGO IN SHIPS BY VIBRATION**
VERFAHREN UND VORRICHTUNG ZUM LÖSEN VON SCHÜTTGÜTERN IN SCHIFFRÄUMEN DURCH VIBRATION
PROCEDE ET DISPOSITIF DE DESARRIMAGE D'UNE CARGAISON EN VRAC DANS UN NAVIRE PAR APPLICATION DE VIBRATIONS

(30) Priority: 17.04.2003 NL 1023208
(43) Date of publication of application: 15.02.2006
(73) Proprietor: Vermeulen, Jozeph Maria, 3248 BA Melissant (NL)
(72) Inventor: Vermeulen, Jozeph Maria, 3248 BA Melissant (NL)
(74) Representative: Nederlof, Etienne C.
(86) International application number: PCT/NL2004/000259
(87) International publication number: WO 2004/092043

(56) References cited:
- EP-A- 0 855 468
- JP-A- 08 165 674
- US-A- 2 229 037
- US-A- 3 400 770

## Description

The invention relates to a method for loosening bulk cargo in ships by vibration.

The invention further relates to a device for loosening bulk cargo in ships by vibration.

It is a known phenomenon that when unloading coal from ships the coal remains stuck at certain places of the ship. It for instance regards the spaces between ribs of the wall of the cargo space, or behind stairs. Due to the coal's own heavy weight, coal will be compressed tightly at those places during transport, as a result of which during unloading it will not fall down to the bottom of the ship of its own accord. Several ways to loosen the stuck coal in order to unload it are known.

The first way regards manually loosening the stuck coal, for instance with a fork and using a lifting platform, which is very laborious. In manual loosening there is a chance that large quantities (several tons) are being loosened at a time which, depending on the size of the ship, might endanger the personnel in the cargo space.

A second way regards the use of a mechanism wherein a heavy hammer is repeatedly struck against the wall of the cargo space (this system is also called "woodpecker"). This makes a sound like a hand machine gun. A drawback of this method is that striking against the wall involves a lot of noise and vibrations. Furthermore striking against the wall with great force may alter the structure of the wall at that location due to plastic deformation. For instance the wall portions against which the hammer has been struck may have a permanently thinner wall thickness, and the wall may get damaged.

A third way regards the use of a vehicle on which a vibration mechanism including a vibration plate is mounted. The vibration plate is brought into contact with the wall of the cargo space due to which the entire wall vibrates along with the vibration plate; this makes the sound of a hand machine gun. Due to the vibrations of the wall the coal is loosened. Because of the noise and the vibrations the vibration plate is covered with rubber. This renders bringing the wall into vibration more difficult.

The known vehicle including vibration plate has the drawback that the transmission of the vibrations from the vibration plate onto the wall involves great forces. The wall may get damaged as a result, and the vibration mechanism and the vehicle itself are regularly damaged. The person operating the vehicle including vibration plate will be troubled by the heavy vibrations. The vibration against the wall using the vibration plate further involves a lot of noise (the noise is known to be heard over a distance of approximately 5 km). The latter two aspects are undesirable in view of legislation concerning occupational health and safety.

Furthermore it is hard to loosen coal stuck in corners of the cargo space with this known vehicle including vibration plate. Due to the firmness of the corners the walls are difficult to get into motion at those locations. Furthermore due to the vehicle's own dimensions, corners are hard to reach with the vibration plate; the vibration plate cannot be placed flat against the wall at the location of the corner. Often the vibration plate is then placed at an edge of an adjacent rib which may result in damaging the rib, which further increases the chance of damaging the vibration plate and the vehicle. Furthermore coal stuck near a wall behind which a filled tank is present is more difficult to loosen by vibration: due to the filled tank the wall at that location is hard to bring into motion due to which the loosening by vibration is rendered difficult to a great extent.

Another drawback of the known vehicle including vibration plate is that apart from the necessary repairs, it can only be operated half the time as the vibration mechanism has to cool off regularly. After each minute of vibrating a minute of standstill has to be observed.

It is to be noted that EP 0 855 468 A1 discloses a vehicle comprising a holder having a pin-shaped vibration device and means for bringing the pin-shaped device into vibration. Such a vehicle is used for carrying out breaking operations.

It is object of the invention to provide a method for efficiently loosening bulk cargo in ships by vibration wherein damage of the ship is prevented:

To that end the invention provides a method for loosening bulk cargo in ships according to claim 9. By using such a frequency, below to be referred to as high frequency, bulk cargo can be surprisingly efficiently loosened. Much less force is necessary than when using the vibration plate which vibrates at a low frequency of approximately 10 Hz. Also as regards the striking against the wall with the heavy hammer, which also takes place at a frequency of approximately. 10 Hz, much less force is necessary. According to the invention it is only necessary to press the vibration device against the wall, the rib or the bulk cargo with relatively little force. The wall, the rib and/or the bulk cargo vibrate(s) along with the vibration device so that the stuck bulk cargo is loosened. As a result of the relative low force with which the vibration device is pressed on there will be no damage of the wall or ribs.

Using a high frequency vibration has also appeared to evenly loosen the bulk cargo. Using a high frequency vibration also leads to a considerable reduction of noise and vibration intensity as compared to the use of the vibration plate or the heavy hammer.

The choice for bringing the wall/rib into vibration at the location of the stuck bulk cargo or the stuck bulk cargo itself depends on the hardness of the bulk cargo. Vibrations propagate better in harder material, such as for instance iron ore, so that in those cases the material itself can be brought into vibration in order to loosen it. Vibrations propagate less well in softer material, such as for instance coal, so that in those cases the wall/rib has to be brought into vibration.

Due to the pin shape locations that are hard to reach are better accessible. For instance the pin-shaped vibration device can be moved between the bars or steps of a stairs in order to loosen bulk cargo stuck at the location of the stairs by vibration.

The pin-shaped vibration device is brought into contact with the wall or the rib or the stuck bulk cargo at an angle of between 0 and 90°. Due to the inclined positioning possibility of the pin-shaped vibration device the accessibility of locations that are hard to reach is further increased. For instance a corner is now properly accessible because the pin-shaped vibration device can be placed inclined against the wall at the location of a corner: In case of a wall portion in front of which an obstacle is placed, for instance a pipe, the pin-shaped vibration device is brought into contact with that obstacle.

In one embodiment the pin-shaped vibration device vibrates in a direction perpendicular to its longitudinal axis.

Preferably the vibration device is brought into contact with the wall or rib or the stuck bulk cargo in a springy manner. By pressing a pin-shaped vibration device in a springy manner, the pressing force of the pin-shaped vibration device on the wall or rib is limited: in case of increasing pressing force the pin-shaped vibration device will simply deflect from the wall or rib. Damage of the wall or rib is thus prevented. It is advantageous to initially bring the pin-shaped vibration device in contact with the surface of the wall or rib in an inclined manner; this facilitates the deflecting of the pin-shaped vibration device.

In one embodiment the wall is brought into vibration at the location of a corner. A wall or rib, when it is brought into vibration according to the method according to the invention, will carry out a vibration having a relatively small amplitude. Due to the small necessary amplitude lit is now also possible to bring walls of larger rigidity into vibration in order to loosen bulk cargo stuck there by vibration, such as for instance a corner, or a wall behind which a filled tank is present.

Preferably the wall between two ribs and/or the bulk cargo stuck at that location is brought into vibration. When bringing the wall between two ribs into vibration it has appeared that bulk cargo stuck between adjacent ribs is also loosened.

Preferably the bulk cargo is coal, wherein the wall and/or rib is brought into vibration at the location of the stuck coal.

The invention furthermore provides a device for loosening bulk cargo in ships according to claim 1. The loosening of the bulk cargo by vibration takes place by bringing the wall and/or a rib of the cargo space into vibration at the location of the stuck bulk cargo and/or the stuck bulk cargo itself by means of the vibration device. As a result of the relatively low force necessary for loosening bulk cargo by vibration using high frequency vibrations, the device according to the invention will not be damaged, and the device can be designed relatively lightweight and cheap. Frequent repairs such as necessary when using the vibration plate are also avoided. It is now also possible to work continuously: due to the lower forces no separate cooling-off stage is necessary for the means for bringing the vibration device into vibration. The above-mentioned effects mean a considerable increase of efficiency in the loosening of stuck bulk cargo. With the device according to the invention and its embodiments mentioned below, the advantages described with the method are also achieved.

Preferably several pin-shaped vibration devices are provided parallel to each other, preferably two parallel pin-shaped vibration devices.

Preferably the pin-shaped vibration device has a rounded-off distal end.

In a preferred embodiment the means to bring the pin-shaped vibration device into vibration are adapted for bringing the pin-shaped vibration device into vibration in a direction perpendicular to its longitudinal axis.

Preferably means are provided for orienting the vibration device. By means of the orienting means the vibration device is able to be positioned at various angles, for instance more or less inclined against the wall, or straight on or parallel to the wall. The inclined positioning possibility in combination with the pin-shaped vibration device results in the same advantages as described above.

In a preferred embodiment a supporting element for the vibration device is provided wherein the vibration device is attached to the supporting element by means of a spring. In combination with the use of the pin-shaped vibration device the possibility of the pin-shaped vibration device deflecting mentioned above is achieved. In case of a rounded-off distal end of the pin-shaped vibration device its deflection is further facilitated.

Advantageously the spring is a helical spring.

In a preferred embodiment the device is mobile.

In one embodiment the means for bringing the vibration device into vibration comprise a hydraulic drive. Other types of drives, such as electric or pneumatic ones are also possible.

An exemplary embodiment of the device and the method according to the invention will be described below by way of example on the basis of the figures.
Figure 1 shows a vehicle having a schematically shown vibration mechanism for the loosening of stuck bulk cargo in ships by high frequency vibration.
Figure 2 shows in more detail in perspective view the bottom side of the vibration mechanism of the vehicle shown in figure 1.
Figure 3 shows a side view of the support shown in figure 2.
Figures 4A-4D show a method for loosening stuck coal between ribs of a wall of the cargo space of a ship by high frequency vibrations.

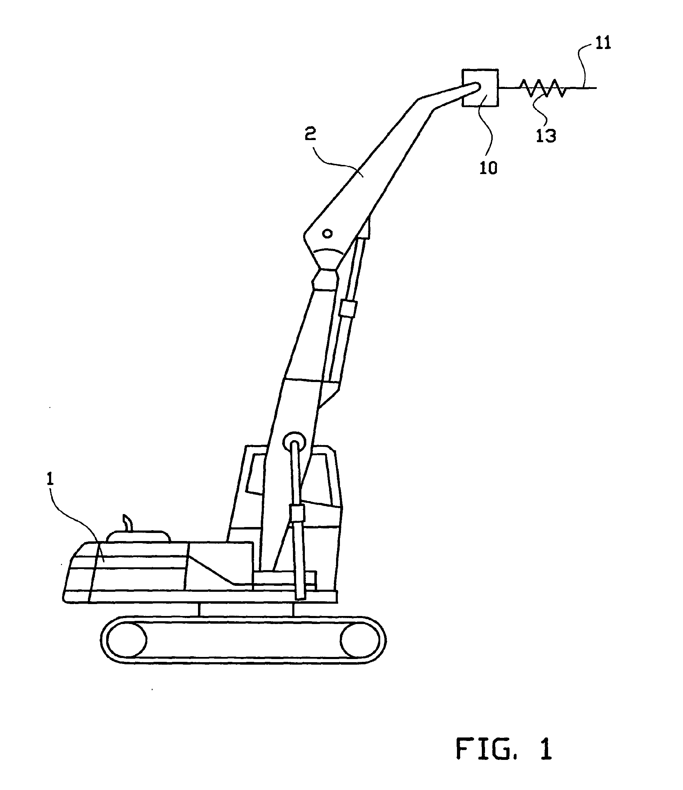

The caterpillar vehicle 1 shown schematically in figure 1 has an arm 2 to which a support 10 is attached which can be tilted with respect to the arm 2 in the direction of the arrow. The tilting of the support 10 can be adjusted by the driver of the vehicle 1. A pair of adjacently positioned vibration pins 11, 12 (only the front vibration pin 11 is visible in the figure) is attached to the support 10 by means of the respective springs 13, 14 (only the front spring 13 is visible).

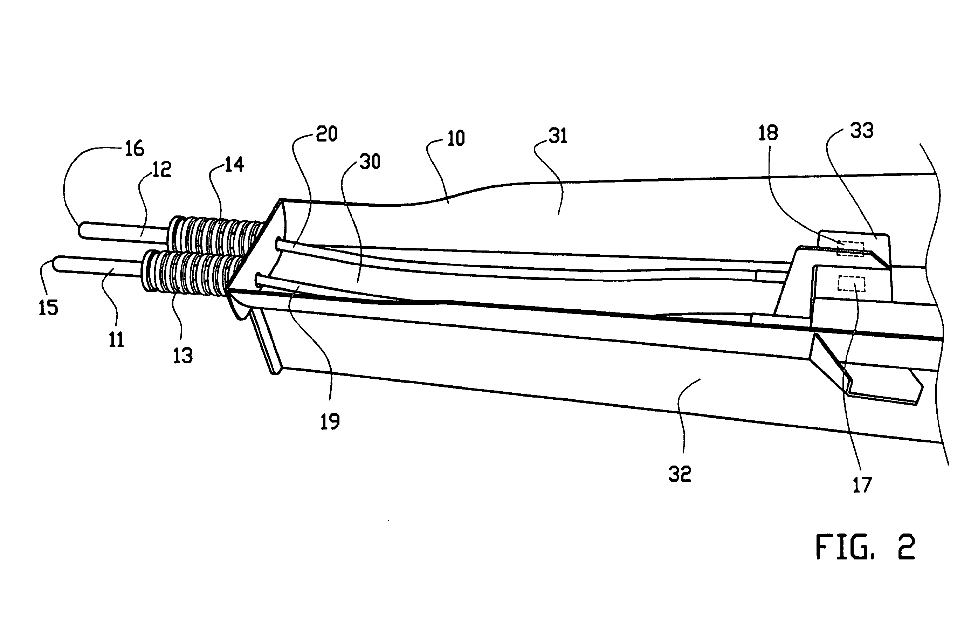

In figure 2 a bottom view of the vibration mechanism of figure 1 is shown in more detail. The channel-shaped support 10 has an upper plate 30, side plates 31, 32 and is open at the bottom side. The vibration pins 11, 12 with respective rounded-off, semi-spherical distal ends 15, 16 are standard commercially available. The vibration pins 11, 12 are attached to respective ends of the helical springs 13, 14. With their other ends the helical springs 13, 14 are attached to the support 10.

The drive for bringing the vibration pins 11, 12 in a high frequency vibration (for instance 200 Hz) comprises respective hydraulically driven motors 17, 18 which are attached to the support 10 in between the side plates 31, 32.
The motors 17, 18 are covered with a cover plate 33, the location of the motors 17, 18 under the cover plate 33 is indicated by the dashed lines. The motors 17, 18 can be connected to the hydraulic system of the vehicle 1 in order to be operated by the driver of the vehicle 1. By means of cables 19, 20 the motors 17, 18 are connected to the vibration pins 11, 12 to bring the latter two into vibration in a direction perpendicular to the longitudinal axis of the vibration pins 11, 12. The system of a vibration pin which by means of a cable is brought into vibration by a motor is known from actual practice, for instance to compact concrete, and will not be discussed here in detail.

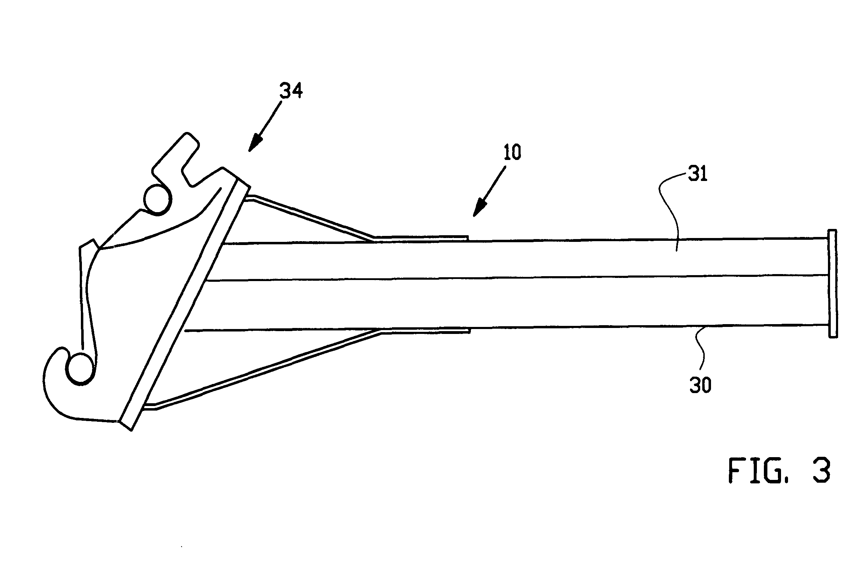

Figure 3 shows a schematic side view of just the support 10 with attachment part 34 for attachment to the arm 2 of the vehicle 1.

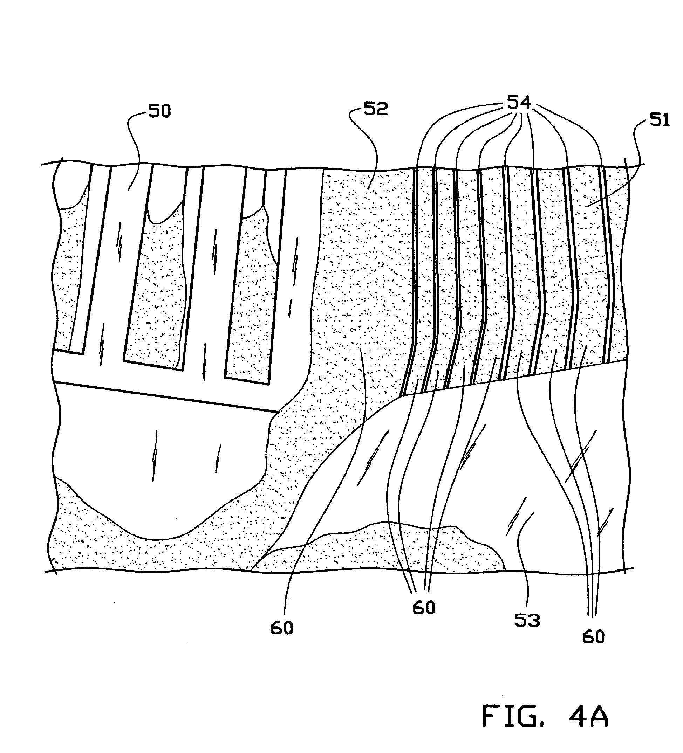

Figure 4A shows a part of the cargo space of a ship having a first side wall. 50 and a second side wall 51 having a corner 52 in between them. An inclined wall 53 sloping towards the floor of the cargo space is situated below side wall 51. Between ribs 54 of side wall 51 and in corner 52 stuck coal 60 is located.

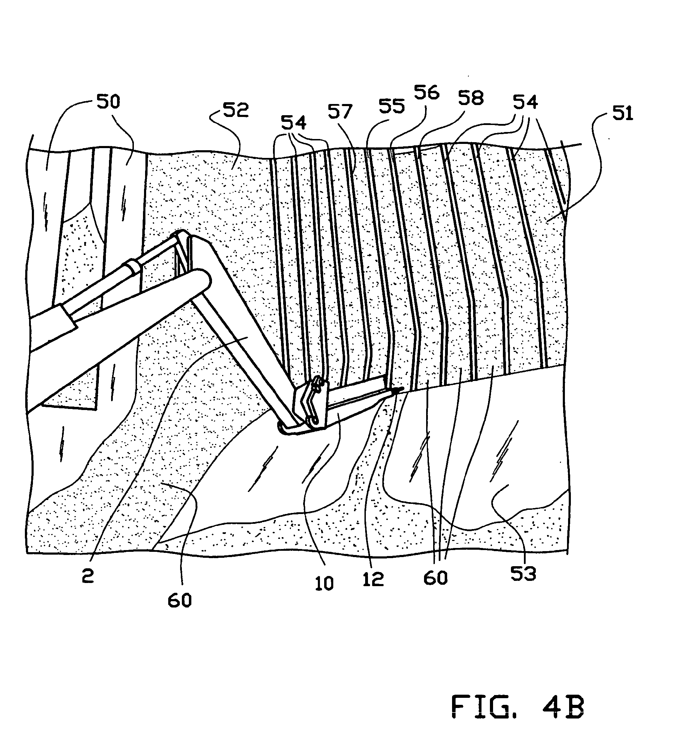

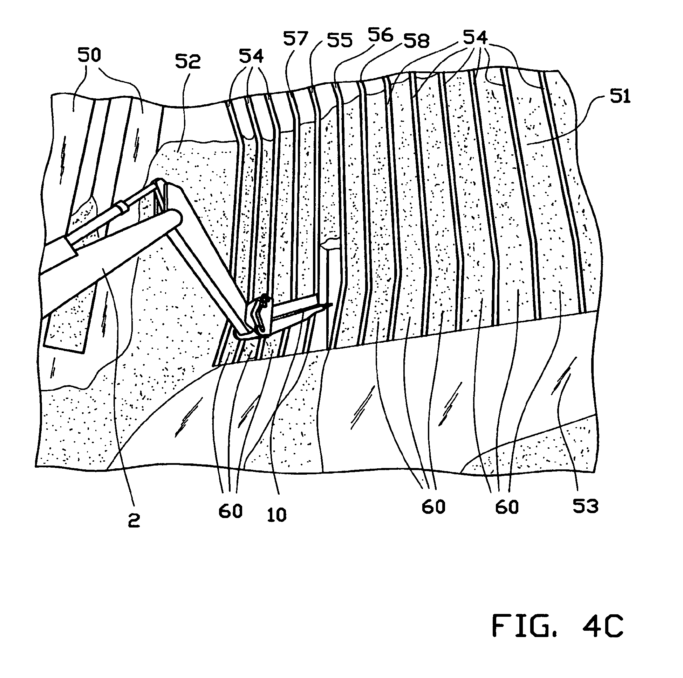

Figure 4B shows the bringing into contact of the ends 15, 16 of the vibration pins 11, 12 with the inclined wall 53 at the location of the transition with the side wall 51, between two adjacent ribs 55, 56. The vibration pins 11, 12 are brought into contact with the wall surface in an inclined manner. By keeping the high frequency vibrating vibration pins 11, 12 pressed against the inclined wall 53 the side wall 51 will vibrate along at that location. The coal stuck between the ribs 55, 56 are loosened as a result as shown in figure 4C. It has appeared that coal stuck in immediately adjacent spaces, limited by ribs 57-55 and 56-58, respectively, is also loosened. It is observed that the intermediate distance between the vibration pins 11, 12 may be chosen larger than the width of a rib so that the vibration pins are able to vibrate on both sides of the rib simultaneously.

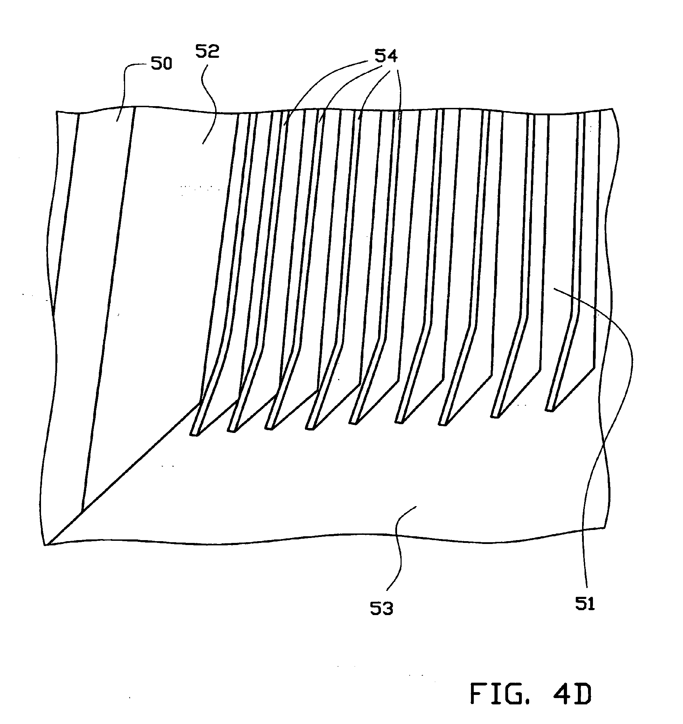

When the spaces between the respective ribs 57-55, 55-56, 56-58 have thus been cleared, the vibration pins 11, 12 are placed at another location to loosen the coal stuck there: the vibration pins 11, 12 may where necessary be brought into contact with for instance the inclined wall 53, a rib 54, the side wall 51 or the side wall 50. The entire cargo space, or a large part thereof; can thus be cleared of stuck coal. The side wall 51 and corner 52 thus cleared of coal are shown in figure 4D.

Due to shape of the vibration pins 11, 12, locations in the cargo space that are hard to reach are now also accessible, for instance spaces behind stairs (the vibration pins 11, 12 are inserted between the steps or bars of the stairs). By tilting the support 10 with respect to the arm 2, the driver of the vehicle 1 is able to place the vibration pins 11, 12 inclined on a wall in vertical direction. Moreover by swinging the arm 2 round, the vibration pins 11, 12 can be placed inclined on a wall in horizontal direction. As a result the accessibility of locations that are hard to reach is further increased, particularly of a corner 52. The vibration pins 11, 12 are then placed inclined on an (adjacent) wall portion of the corner 52 in order to loosen the coal by vibration.

The pressing force of the vibration pins 11, 12 on the wall is limited by the respective springs 13, 14 as a result of which damage to both the ship's wall and the vibration mechanism is prevented. Due to their rounded-off ends 15, 16 the vibration pins 11, 12, in case of larger pressing force, will deflect from the wall due to the springs 13, 14 bending. Due to the small forces the driver of vehicle 1 will not be troubled by vibrations, and the vibration mechanism itself as well will not be damaged by the vibrations. The noise level when using the device shown in the figures is low.

## Claims

1. Device for loosening bulk cargo in ships by vibration comprising a holder (10) having at least one pin-shaped vibration device (11,12) having a vibration surface (15,16) to be placed against a ship's surface and means for bringing the pin-shaped vibration device including vibration surface into vibration, wherein the device comprises means (17,18) for bringing the vibration device in a vibration at a frequency of at least 80 Hz, preferably at a frequency of at least 200 Hz.

2. Device according to claim 1, wherein the holder (10) is provided with at least two vibration devices (11,12), which are placed at an intermediate distance from each other, preferably parallel to one another, which preferably is larger than the thickness of a rib (54-58) in the ship's surface.

3. Device according to claim 1 or 2, wherein a spring (13,14) is positioned between the vibration surface (15,16) and the holder (10), wherein, preferably, the spring is placed around the vibration device and preferably is a helical spring, wherein, preferably, the spring surrounds the vibration device with some play.

4. Device according to claim 1, 2 or 3 wherein the means (17,18) to bring the pin-shaped vibration device (11,12) into vibration are adapted for bringing the pin-shaped vibration device into vibration in a direction perpendicular to its longitudinal axis.

5. Device according to any one of the preceding claims, further comprising means (2) for orienting the vibration device.

6. Device according to any one of the preceding claims, wherein the device (1) is mobile.

7. Device according to any one of the preceding claims, wherein the means for bringing the vibration device into vibration comprise a hydraulic drive.

8. Device according to any one of the preceding claims, wherein the vibration device (11,12) has a cylindrical end, preferably a straight circular cylindrical end, wherein, preferably, the pin-shaped vibration device has a rounded-off distal end (15,16).

9. Method for loosening bulk cargo in ships by vibration by bringing the wall (50, 51, 53) and/or a rib (54-58) of the ship at the location of the stuck bulk cargo (60) and/or the stuck bulk cargo (60) itself into vibration, using a vibration device, wherein the vibration device vibrates at a frequency of at least 80 Hz, preferably at least 200 Hz, and wherein the vibration device is pin-shaped.

10. Method according to claim 9, wherein the pin-shaped vibration device is brought into contact with the wall or the rib or the stuck bulk cargo at an angle of between 0 and 90°.

11. Method according to claim 9 or 10, wherein the pin-shaped vibration device vibrates in a direction perpendicular to its longitudinal axis.

12. Method according to claim 9, 10, or 11, wherein the vibration device is brought into contact with the wall or rib or the stuck bulk cargo in a springy manner.

13. Method according to any one of the claims 9-12, wherein the wall is brought into vibration at the location of a corner (52).

14. Method according to any one of the claims 9-13, wherein the wall between two ribs and/or the bulk cargo stuck at that location is brought into vibration.

15. Method according to any one of the claims 9-14, wherein the bulk cargo is coal, wherein the wall and/or rib is brought into vibration at the location of the stuck coal.

## Patentansprüche

1. Einrichtung zum Lösen von Schüttgut in Schiffen durch Vibration, umfassend eine Haltevorrichtung (10) mit mindestens einer stiftförmigen Vibrationseinrichtung (11, 12) mit einer Vibrationsfläche (15, 16), die gegen die Oberfläche eines Schiffs platziert wird, und Mittel zum Versetzen der stiftförmigen Vibrationseinrichtung einschließlich der Vibrationsfläche in Vibration, wobei die Einrichtung Mittel (17, 18) zum Versetzen der Vibrationseinrichtung in eine Vibration bei einer Frequenz von mindestens 80 Hz, vorzugsweise einer Frequenz von mindestens 200 Hz, umfasst.

2. Einrichtung nach Anspruch 1, wobei die Haltevorrichtung (10) mit mindestens zwei Vibrationseinrichtungen (11, 12) versehen ist, die in einem Zwischenabstand voneinander platziert sind, vorzugsweise parallel zueinander, der vorzugsweise größer als die Stärke eines Spants (54-58) in der Oberfläche des Schiffs ist.

3. Einrichtung nach Anspruch 1 oder 2, wobei eine Feder (13, 14) zwischen der Vibrationsfläche (15, 16) und der Haltevorrichtung (10) positioniert ist, wobei die Feder vorzugsweise um die Vibrationseinrichtung herum platziert ist und vorzugsweise eine Schraubenfeder ist, wobei die Feder die Vibrationseinrichtung vorzugsweise mit einigem Spiel umgibt.

4. Einrichtung nach Anspruch 1, 2 oder 3, wobei die Mittel (17, 18) zum Versetzen der stiftförmigen Vibrationseinrichtung (11, 12) in Vibration eingerichtet sind, um die stiftförmige Vibrationseinrichtung in Vibration in einer Richtung senkrecht zu ihrer Längsachse zu versetzen.

5. Einrichtung nach einem der vorstehenden Ansprüche, weiterhin umfassend Mittel (2) zum Ausrichten der Vibrationseinrichtung.

6. Einrichtung nach einem der vorstehenden Ansprüche, wobei die Einrichtung (1) mobil ist.

7. Einrichtung nach einem der vorstehenden Ansprüche, wobei die Mittel zum Versetzen der Vibrationseinrichtung in Vibration einen hydraulischen Antrieb umfassen.

8. Einrichtung nach einem der vorstehenden Ansprüche, wobei die Vibrationseinrichtung (11, 12) ein zylindrisches Ende aufweist, vorzugsweise ein gerades kreisförmiges zylindrisches Ende, wobei die stiftförmige Vibrationseinrichtung vorzugsweise ein abgerundetes distales Ende (15, 16) aufweist.

9. Verfahren zum Lösen von Schüttgut in Schiffen durch Vibration durch Versetzen der Wand (50, 51, 53) und/oder eines Spants (54-58) des Schiffs am Ort des festsitzenden Schüttguts (60) und/oder des festsitzenden Schüttguts (60) selbst in Vibration durch Verwendung einer Vibrationseinrichtung, wobei die Vibrationseinrichtung bei einer Frequenz von mindestens 80 Hz, vorzugsweise mindestens 200 Hz, vibriert und wobei die Vibrationseinrichtung stiftförmig ist.

10. Verfahren nach Anspruch 9, wobei die stiftförmige Vibrationseinrichtung in einem Winkel von 0 bis 90° in Kontakt mit der Wand oder dem Spant oder dem festsitzenden Schüttgut gebracht wird.

11. Verfahren nach Anspruch 9 oder 10, wobei die stiftförmige Vibrationseinrichtung in einer Richtung senkrecht zu ihrer Längsachse vibriert.

12. Verfahren nach Anspruch 9, 10 oder 11, wobei die Vibrationseinrichtung federnd mit der Wand oder dem Spant oder dem festsitzenden Schüttgut in Kontakt gebracht wird.

13. Verfahren nach einem der Ansprüche 9-12, wobei die Wand an der Position einer Ecke (52) in Vibration versetzt wird.

14. Verfahren nach einem der Ansprüche 9-13, wobei die Wand zwischen zwei Spanten und/oder das an der Stelle festsitzende Schüttgut in Vibration versetzt wird.

15. Verfahren nach einem der Ansprüche 9-14, wobei das Schüttgut Kohle ist, wobei die Wand und/oder der Spant am Ort der festsitzenden Kohle in Vibration versetzt wird.

## Revendications

1. Dispositif pour désarrimer une cargaison en vrac dans un navire par application de vibrations, comprenant un support (10) ayant au moins un dispositif de vibration en forme de broche (11, 12) ayant une surface de vibration (15, 16) destinée à être placée contre une surface de navire et des moyens pour faire vibrer le dispositif de vibration en forme de broche comprenant la surface de vibration, dans lequel le dispositif comprend des moyens (17, 18) pour faire vibrer le dispositif de vibration à une fréquence d'au moins 80 Hz, de préférence à une fréquence d'au moins 200 Hz.

2. Dispositif selon la revendication 1, dans lequel le support (10) est prévu avec au moins deux dispositifs de vibration (11, 12) qui sont placés à une distance intermédiaire l'un de l'autre, de préférence parallèles l'un par rapport à l'autre, qui est de préférence supérieur à l'épaisseur d'un tasseau (54-58) dans la surface du navire.

3. Dispositif selon la revendication 1 ou 2, dans lequel un ressort (13, 14) est positionné entre la surface de vibration (15, 16) et le support (10), dans lequel, de préférence, le ressort est placé autour du dispositif de vibration et de préférence est un ressort hélicoïdal, dans lequel, de préférence, le ressort entoure le dispositif de vibration avec un certain jeu.

4. Dispositif selon la revendication 1, 2 ou 3, dans lequel les moyens (17, 18) pour faire vibrer le dispositif de vibration en forme de broche (11, 12) sont adaptés pour faire vibrer le dispositif de vibration en forme de broche dans une direction perpendiculaire à son axe longitudinal.

5. Dispositif selon l'une quelconque des revendications précédentes, comprenant en outre des moyens (2) pour orienter le dispositif de vibration.

6. Dispositif selon l'une quelconque des revendications précédentes, dans lequel le dispositif (1) est mobile.

7. Dispositif selon l'une quelconque des revendications précédentes, dans lequel les moyens pour faire vibrer le dispositif de vibration comprennent un entraînement hydraulique.

8. Dispositif selon l'une quelconque des revendications précédentes, dans lequel le dispositif de vibration (11, 12) a une extrémité cylindrique, de préférence une extrémité cylindrique circulaire droite, dans lequel, de préférence, le dispositif de vibration en forme de broche a une extrémité distale arrondie (15, 16).

9. Procédé pour désarrimer une cargaison en vrac d'un navire par application de vibrations en faisant vibrer la paroi (50, 51, 53) et/ou un tasseau (54-58) du navire à l'emplacement de la cargaison en vrac bloquée (60) et/ou la cargaison en vrac bloquée (60) elle-même, en utilisant un dispositif de vibration, dans lequel le dispositif de vibration vibre à une fréquence d'au moins 80 Hz, de préférence d'au moins 200 Hz, et dans lequel le dispositif de vibration est en forme de broche.

10. Procédé selon la revendication 9, dans lequel le dispositif de vibration en forme de broche est amené en contact avec la paroi ou le tasseau ou la cargaison en vrac bloquée selon un angle compris entre 0 et 90°.

11. Procédé selon la revendication 9 ou 10, dans lequel le dispositif de vibration en forme de broche vibre dans une direction perpendiculaire à son axe longitudinal.

12. Procédé selon la revendication 9, 10 ou 11, dans lequel le dispositif de vibration est amené en contact avec la paroi ou le tasseau ou la cargaison en vrac bloquée à la manière d'un ressort.

13. Procédé selon l'une quelconque des revendications 9 à 12, dans lequel la paroi est mise en vibration à l'emplacement d'un coin (52).

14. Procédé selon l'une quelconque des revendications 9 à 13, dans lequel la paroi entre deux tasseaux et/ou la cargaison en vrac bloquée à cet emplacement est mise en vibration.

15. Procédé selon l'une quelconque des revendications 9 à 14, dans lequel la cargaison en vrac est du charbon, dans lequel la paroi et/ou le tasseau est mis en vibration à l'emplacement du charbon bloqué.
